# EUROPÄISCHE PATENTSCHRIFT

(11) **EP 4 407 150 B1**
(45) Veröffentlichungstag und Bekanntmachung des Hinweises auf die Patenterteilung: **08.04.2026**
(21) Anmeldenummer: 24152732.4
(22) Anmeldetag: 18.01.2024
(51) Int. Cl.: F01M 11/00, F01M 1/12, F16H 57/04

(54) **ÖLWANNE, INSBESONDERE ÖLFILTERMODUL, MIT EINEM MEHRTEILIGEN GEHÄUSE**
OIL SUMP, IN PARTICULAR OIL FILTER MODULE, WITH A MULTIPART HOUSING
CARTER D'HUILE, EN PARTICULIER MODULE DE FILTRE À HUILE, DOTÉ D'UN BOÎTIER EN PLUSIEURS PARTIES

(30) Priorität: 24.01.2023 DE 102023101650
(43) Veröffentlichungstag der Anmeldung: 31.07.2024
(73) Patentinhaber: Schwäbische Hüttenwerke Automotive GmbH, 73433 Aalen (DE)
(72) Erfinder: Kostic, Enis, 88422 Bad Buchau (DE); Kunzi, Harald, 71364 Winnenden (DE); Peters, Sven, 88427 Bad Schussenried (DE); Jäggle, Gerd, 88521 Ertingen (DE)
(74) Vertreter: SSM Sandmair

(56) Entgegenhaltungen:
- EP-A1- 1 371 821
- EP-B1- 2 585 689
- US-A1- 2008 283 020
- US-A1- 2010 230 212

## Beschreibung

Die Erfindung betrifft eine zur Versorgung eines Aggregats (Maschinenaggregat) für ein, beispielsweise elektrisch oder vollelektrisch angetriebenes, Kraftfahrzeug konfigurierte Ölwanne mit einem mehrteiligen, wie z. B. dreiteiligen, Gehäuse. Die Ölwanne kann beispielsweise als Ölfiltermodul ausgestaltet sein und eine Ölfilteraufnahme bilden, die beispielsweise integraler Bestandteil des Gehäuses oder eines Gehäuseteils der Ölwanne sein kann. Die Ölwanne kann Teil eines Ölfördermoduls sein, welches zur Versorgung mindestens eines Maschinenaggregats mit Öl, insbesondere zur Versorgung eines (Elektro-)Motors und/oder eines Getriebes eines Kraftfahrzeugs mit Öl, ausgebildet ist. Das Maschinenaggregat kann beispielsweise eine Baueinheit oder eine Kombination aus Elektromotor und Getriebe, das an einer Antriebswelle und/oder einem Gehäuse des Elektromotors angeordnet ist, sein. Das Öl dient zur Schmierung und/oder Kühlung des Maschinenaggregats. Die Ölwanne umfasst ein Gehäuse mit einem Ölaufnahmeraum für die Bevorratung des Öls, das hierin auch als Fluid bezeichnet sein kann. Das Ölfördermodul kann neben der Ölwanne oder dem Ölfiltermodul mindestens eine Pumpe zur Förderung des Fluids zum Maschinenaggregat aufweisen.

Aus dem Stand der Technik sind Fluidfördersysteme zur Versorgung eines Maschinenaggregats, insbesondere eines Motors oder eines Getriebes eines Kraftfahrzeugs, mit Fluid bekannt. Derartige Systeme basieren auf dem Konzept einer Druckumlaufschmierung, insbesondere einer Nasssumpfschmierung, wobei mittels einer Pumpe Fluid zu den Fluidverbrauchern, d. h. den zu schmierenden und/oder zu kühlenden Stellen, gefördert wird. Bei einer Nasssumpfschmierung wird das Öl beim Ablaufen von dem Maschinenaggregat in einem Reservoir, insbesondere einer Ölwanne, welches unterhalb des Maschinenaggregats angeordnet ist, aufgefangen. Mittels der Pumpe wird das Öl aus der Ölwanne abgepumpt und dem Maschinenaggregat erneut zugeführt. Auf diese Weise entsteht ein Ölkreislauf.

Es ist bekannt, die Ölwanne mit einem Ölfilter zu einem Ölfiltermodul zu kombinieren, das aus dem zum Maschinenaggregat geführten Öl Partikel und Verschmutzungen herausfiltert. Der Bauraum unterhalb eines Maschinenaggregats ist oftmals beengt. Eine kompakte Bauweise ist somit für das Ölfiltermodul wünschenswert. Eine kompakte Bauweise kann jedoch die Herstellung erschweren. Die EP 2 585 689 B 1 offenbart solch eine Ölwanne gemäß dem Oberbegriff des Anspruchs 1.

Es ist eine Aufgabe der Erfindung, eine Ölwanne anzugeben, welche zuverlässig arbeitet, einen geringen Platzbedarf hat und einfach herstellbar ist.

Die Aufgabe wird mit einer Ölwanne mit den Merkmalen gemäß Anspruch 1 gelöst. Vorteilhafte Weiterbildungen ergeben sich aus den abhängigen Ansprüchen, der Beschreibung und den Figuren.

Die Erfindung geht von einer Ölwanne mit einem Gehäuse aus, das einen Ölaufnahmeraum zur Bevorratung von Öl einfasst. Das Gehäuse umfasst einen Gehäuserahmen, einen Gehäuseboden und einen Gehäusedeckel, die beispielsweise separate Teile sind, die insbesondere miteinander fluiddicht verschweißt sein können. Der Gehäuserahmen ist zwischen dem Gehäusedeckel und dem Gehäuseboden angeordnet. Der Gehäuserahmen kann eine umlaufende Wand bilden, die den Ölaufnahmeraum umfangsseitig einfasst. Der Gehäusedeckel kann an der nach oben weisenden Stirnseite des Gehäuserahmens angeordnet sein und/oder den Ölaufnahmeraum von oben abschließen. Der Gehäuseboden kann an der nach unten weisenden Stirnseite des Gehäuserahmens angeordnet sein und/oder den Ölaufnahmeraum von unten abschließen. Beispielsweise kann der Gehäusedeckel auf der Seite des Gehäuserahmens angeordnet sein, die zu einem Aggregat, welches mit Öl aus dem Ölfiltermodul versorgt wird, weist. Beispielsweise kann der Gehäuseboden auf der Seite des Gehäuserahmens angeordnet sein, die von einem Aggregat, welches mit Öl aus der Ölwanne versorgt wird, weg weist. "Oben" bezieht sich auf die für den Betrieb der Ölwanne vorgesehene Einbaulage und weist vom Erdmittelpunkt weg. "Unten" bezieht sich auf die für den Betrieb der Ölwanne vorgesehene Einbaulage und weist zum Erdmittelpunkt hin. Die Ölwanne oder zumindest deren Gehäuse kann flach ausgeführt sein, insbesondere für ein, beispielsweise elektrisch oder vollelektrisch angetriebenes, Kraftfahrzeug mit einem tiefen Schwerpunkt, wie es bei Sportwagen der Fall sein kann. "Flach" heißt, dass die Höhe der Ölwanne oder des Gehäuses, die sich vom Gehäuseboden über den Gehäuserahmen bis zum Gehäusedeckel erstreckt, deutlich kleiner ist als die quer dazu sich erstreckende Länge und Breite.

Der Gehäusedeckel und der Gehäuseboden können beispielsweise parallel oder schräg zueinander angeordnet sein. Die umlaufende Wand des Gehäuserahmens kann beispielsweise mehrere Seitenwandabschnitte aufweisen, die zusammen beispielsweise eine ungefähr rechteckige Form bilden. Zwei gegenüberliegende Seitenwandabschnitte können beispielsweise für eine parallele Anordnung von Gehäusedeckel und Gehäuseboden gleich hoch oder für eine schräge Anordnung von Gehäusedeckel und Gehäuseboden unterschiedlich hoch ausgeführt sein. Zwei weitere Seitenwandabschnitte können die zwei gegenüberliegenden Seitenwandabschnitte verbinden. Die zwei weiteren Seitenwandabschnitte können für die schräge Anordnung von Gehäuseboden und Gehäusedeckel keilförmig ausgebildet sein.

Der Gehäusedeckel kann mittels einer Fügeverbindung, wie z. B. einer Verschraubung oder vorzugsweise einer stoffschlüssigen Fügeverbindung, insbesondere durch Kleben oder Schweißen, mit dem Gehäuserahmen gefügt sein. Alternativ oder zusätzlich kann der Gehäuseboden mittels einer Fügeverbindung, wie z. B. einer Verschraubung oder vorzugsweise einer stoffschlüssigen Fügeverbindung, insbesondere durch Kleben oder Schweißen, mit dem Gehäuserahmen gefügt sein. Grundsätzlich können die Teile des Gehäuses aus Metall gebildet sein. Vorzugsweise sind die Gehäuseteile aus Kunststoff oder zumindest überwiegend aus Kunststoff gefertigt. D. h., dass zumindest einer aus Gehäuserahmen, Gehäuseboden und Gehäusedeckel aus einem Kunststoff oder überwiegend aus einem Kunststoff gebildet ist. In einem Ausführungsbeispiel können der Gehäuseboden, der Gehäusedeckel und der Gehäuserahmen voneinander separate Bauteile sein, die im montierten oder gefügten Zustand fluid- oder öldicht miteinander gefügt, insbesondere verschweißt sind, um beispielsweise den Ölaufnahmeraum nach außen hin abzudichten.

Der Gehäuserahmen als solcher, d.h. allein, kann einen oder mehrere Ölkanäle bilden. Alternativ oder zusätzlich kann der Gehäuserahmen zusammen mit dem Gehäuseboden und/oder dem Gehäusedeckel einen oder mehrere Ölkanäle bilden. Der oder die Ölkanäle können dazu dienen oder konfiguriert sein, Öl über die Ölwanne dem Aggregat zuzuführen und/oder aus dem Aggregat abzuführen. In Ausführungen, in denen der Gehäuserahmen zusammen mit dem Gehäusedeckel oder dem Gehäuseboden einen oder mehrere Ölkanäle bildet, können der Gehäuserahmen mit dem Gehäusedeckel und/oder dem Gehäuseboden so gefügt sein, wie z.B. mittels Kleben oder Verschweißen (d. h. stoffschlüssige Fügeverbindungen), dass der oder die Ölkanäle durch die Schweiß- oder Klebenaht nach außen hin und/oder zum Ölaufnahmeraum hin, insbesondere öl- oder fluiddicht, abgedichtet sind.

Dadurch können separate, zwischen dem Gehäuserahmen und dem Gehäusedeckel bzw. zwischen dem Gehäuserahmen und dem Gehäuseboden angeordnete Dichtungen, wie z.B. Flachdichtungen, eingespart werden. Grundsätzlich sind aber auch Ausführungsformen mit solchen separaten Dichtungen möglich.

Die Ölwanne, insbesondere das Gehäuse oder der Gehäuserahmen, kann zur Bildung eines Ölfiltermoduls eine Ölfilteraufnahme, die zur Aufnahme eines Ölfilters konfiguriert ist, aufweisen oder integral bilden. Die beispielsweise topfförmig ausgebildete Ölfilteraufnahme kann eine Umfangswand und eine Stirnwand aufweisen. Der Ölfilter oder ein Ölfiltereinsatz (d. h. eine Ölfilterpatrone) kann in die Ölfilteraufnahme eingesetzt werden oder sein, wobei die Ölfilteraufnahme das Gehäuse für den Ölfiltereinsatz bilden kann. Es sind also Ausführungen möglich, bei denen der Ölfilter ein Ölfiltergehäuse und einen darin angeordneten Ölfiltereinsatz aufweist und in die Ölfilteraufnahme eingesetzt wird, und alternativ bei denen der Ölfilter im Wesentlichen nur den Ölfiltereinsatz aufweist und die Ölfilteraufnahme das Ölfiltergehäuse bildet. Letztere Ausführung hat den Vorteil, dass ein separates Gehäuse für den Ölfiltereinsatz und somit Gewicht, Bauraum und Kosten eingespart werden können. Die Ölfilteraufnahme kann ein von dem Gehäuse separates Bauteil sein, das z. B. an dem Gehäuse oder Gehäuserahmen befestigt oder zumindest fluidkommunizierend mit der Ölwanne oder einem Ölkanal der Ölwanne verbunden ist. Vorzugsweise bildet eines der Gehäuseteile, insbesondere der Gehäuserahmen, die Ölfilteraufnahme integral mit.

Die Ölwanne weist ferner einen Ansaugkanal auf, der in den, insbesondere von dem Gehäuse eingefassten, Ölaufnahmeraum reicht und eine Öffnung, über die Öl aus dem Ölaufnahmeraum durch den Ansaugkanal förderbar ist, aufweist. Der Ansaugkanal kann gänzlich oder vollständig innerhalb des Gehäuses oder im Ölaufnahmeraum angeordnet sein. Beispielsweise kann der Ansaugkanal an die Saugseite einer Pumpe angeschlossen sein, so dass Öl aus dem Ölaufnahmeraum durch den Ansaugkanal zur Pumpe hin ansaugbar ist. Die Öffnung ist so angeordnet, dass sie in den in dem Ölaufnahmeraum bevorrateten Ölsumpf reicht.

Die Ölwanne, insbesondere das Gehäuse oder dessen Gehäuserahmen kann einen Pumpeneinlassanschluss aufweisen, der fluidkommunizierend mit dem Einlass einer Förderpumpe verbunden oder verbindbar ist. Der Ansaugkanal ist fluidkommunizierend mit dem Pumpeneinlassanschluss verbunden. Dadurch kann aus dem Ölaufnahmeraum Öl über die Öffnung des Ansaugkanals, den Ansaugkanal und den Pumpeneinlassanschluss gefördert, insbesondere von der Pumpe angesaugt werden.

Der Ansaugkanal kann von dem Gehäuse der Ölwanne oder als davon separates Teil gebildet sein. Beispielsweise kann der Ansaugkanal - der in Ausführungsformen gänzlich oder vollständig innerhalb des Gehäuses oder im Ölaufnahmeraum angeordnet sein kann - von einem rohrförmigen Körper, d. h. einem Ansaugrohr, gebildet sein, der in eine von dem Gehäuse, insbesondere dem Gehäuserahmen, gebildete Kanalaufnahme eingesteckt ist. Die Kanalaufnahme kann integral mit dem Gehäuse, insbesondere dem Gehäuserahmen, gebildet sein. Das Gehäuse, insbesondere der Gehäuserahmen kann einen Kanal oder Durchgang bilden, der die Kanalaufnahme und den Pumpeneinlassanschluss verbindet. Zwischen dem Ansaugrohr, das den Ansaugkanal bildet, und der Kanalaufnahme kann beispielsweise eine Dichtung zur Abdichtung eines zwischen dem Ansaugrohr und der Kanalaufnahme gebildeten Spalts oder Dichtspalts angeordnet sein.

Beispielsweise kann der Gehäuserahmen den Ansaugkanal oder zumindest einen Teil des Ansaugkanals, insbesondere integral, bilden. Insbesondere kann der Ansaugkanal einen in Kanallängsrichtung offenen Abschnitt aufweisen, der von dem Gehäuse oder dem Gehäuserahmen gebildet ist. Der offene Abschnitt kann von dem Gehäusedeckel oder einem separaten Deckel zur Bildung eines geschlossenen Kanalquerschnitts des Ansaugkanals verschlossen sein. Im Gegensatz zu einer Ausführung, bei welcher der Ansaugkanal von einem Ansaugrohr, das separat von dem Gehäuse, insbesondere dem Gehäuserahmen ist, gebildet wird, kann der einen in Kanallängsrichtung offenen Abschnitt aufweisende Ansaugkanal integraler Bestandteil des Gehäuses, insbesondere eines der Gehäuseteile, wie z. B. des Gehäuserahmens oder des Gehäusebodens sein. In alternativen Ausführungen kann der Ansaugkanal vollständig von dem Gehäuserahmen gebildet, d. h. integraler Bestandteil des Gehäuserahmens sein.

Der Ölkanal oder einer der Ölkanäle kann fluidkommunizierend mit der Ölfilteraufnahme verbunden sein oder in die Ölfilteraufnahme münden. Dadurch kann erreicht werden, dass das Öl, welches von einem in der Ölfilteraufnahme angebrachten Ölfilter vor Verunreinigungen gefiltert wurde, durch den Ölkanal förderbar ist, insbesondere zu einem Fluidverbraucher oder dem Aggregat, dem das Öl zugeführt werden soll.

Insbesondere kann die Ölwanne, wie z. B. dessen Gehäuse, beispielsweise der Gehäuserahmen und/oder vorzugsweise der Gehäusedeckel mindestens einen zur Ölversorgung des Aggregats ausgebildeten Versorgungsauslass aufweisen. Der Ölkanal oder einer der Ölkanäle kann die Ölfilteraufnahme und den mindestens einen Versorgungauslass fluidkommunizierend verbinden, so dass durch den Ölkanal Öl von der Ölfilteraufnahme zu dem mindestens einen Versorgungsauslass förderbar ist. Der Versorgungsauslass kann nach oben oder zu dem Aggregat hin weisen. Insbesondere kann der Versorgungsauslass auf der Oberseite des Gehäuses, insbesondere des Gehäusedeckels, angeordnet sein. Beispielsweise kann die Ölwanne einen einzigen, zwei, drei oder noch mehr solche Versorgungsauslässe aufweisen. In Ausführungen kann ein Versorgungsauslass für die Versorgung des Elektromotors und ein zusätzlicher Versorgungsauslass für die Versorgung des Getriebes mit Öl vorgesehen sein.

Die Ölwanne kann alternativ oder zusätzlich einen oder mehrere Rückführeinlässe zur Rückführung von Öl aus dem Aggregat in die Ölwanne aufweisen. Das z. B. vom Aggregat abtropfende oder abfließende Öl kann durch die Schwerkraft über den mindestens einen Rückführeinlass in die Ölwanne zurückgeführt werden. Beispielsweise kann das Öl aus dem Aggregat über den Rückführeinlass direkt, insbesondere schwerkraftbedingt bzw. ohne den Weg über eine Pumpe nehmen zu müssen, in die Ölwanne bzw. den Ölaufnahmeraum oder über den Ölkanal oder einen der mehreren Ölkanäle, die von dem Gehäuserahmen oder von dem Gehäuserahmen zusammen mit dem Gehäusedeckel gebildet werden, geführt werden.

Beispielsweise kann die Ölwanne einen oder mehrere Rückführeinlässe zur Rückführung von Öl aus dem Aggregat in die Ölwanne und einen, insbesondere zusätzlichen oder zweiten, Pumpeneinlassanschluss zur Förderung von Fluid von dem Rückführeinlass oder einem der Rückführeinlässe in eine Pumpe aufweisen. Der Ölkanal oder einer der Ölkanäle kann den Rückführeinlass oder einen der Rückführeinlässe mit dem Pumpeneinlassanschluss verbinden, so dass Öl durch den Ölkanal von dem Rückführeinlass oder einem der Rückführeinlässe zu dem Pumpeneinlassanschluss förderbar ist. Über die Pumpe kann das vom Rückführeinlass über den Ölkanal und den Pumpeneinlassanschluss geförderte Öl zurück in die Ölwanne, insbesondere in den Ölaufnahmeraum gefördert werden. Der Vorteil hierbei ist, dass der Ölkanal, über den die Pumpe das Öl in den Ölaufnahmeraum fördert, so ausgebildet sein kann, dass er das Öl an eine gewünschte Stelle in den Ölaufnahmeraum fördert, wie z. B. in den Bereich der Öffnung des Ansaugkanals oder in eine Sektion des in mehrere Sektionen unterteilten Ölaufnahmeraums, wie z. B. in die Sektion, in der die Öffnung des Ansaugkanals angeordnet ist oder in die der Ansaugkanal mündet. Beispielsweise kann der Ölkanal, der den Pumpenauslassanschluss mit dem Ölaufnahmeraum verbindet, in den Ölaufnahmeraum oder die genannte Sektion des Ölaufnahmeraums münden. Der Ölkanal oder einer der Ölkanäle kann den Pumpenauslassanschluss, der mit einem Auslass der Pumpe verbunden ist oder verbunden werden kann, mit dem Ölaufnahmeraum verbinden, so dass durch den Ölkanal Öl von dem Pumpenauslassanschluss in den Ölaufnahmeraum, insbesondere die genannte Sektion, förderbar ist.

Die Ölwanne kann alternativ oder zusätzlich einen oder mehrere Rückführeinlässe zur direkten Rückführung von Öl aus dem Aggregat in die Ölwanne aufweisen. Insbesondere kann das Gehäuse, wie z. B. der Gehäusedeckel den einen oder die mehreren Rückführeinlässe aufweisen. Der Rückführeinlass oder einer der Rückführeinlässe kann, insbesondere direkt, in den Ölaufnahmeraum münden, so dass Öl von dem Rückführeinlass direkt in den Ölaufnahmeraum, insbesondere in eine erste Sektion oder eine zweite Sektion des Ölaufnahmeraums strömen kann. Die erste Sektion kann die Sektion sein, in die der Ansaugkanal mündet oder in der die Öffnung des Ansaugkanals angeordnet ist. Die zweite Sektion kann eine beispielsweise durch eine Trennwand von der ersten Sektion getrennte Sektion des Ölaufnahmeraums sein. Beispielsweise kann ein Rückführeinlass vorgesehen sein, über den Öl aus dem Aggregat direkt in die erste Sektion förderbar ist und/oder ein Rückführeinlass vorgesehen sein, über den Öl aus dem Aggregat direkt in die zweite Sektion förderbar ist.

Die Trennwand, die die zwei Sektionen voneinander teilt, kann einen Durchgang aufweisen, der die zwei Sektionen fluidkommunizierend miteinander verbindet. Der Durchgang bildet eine Engstelle, so dass Öl gedrosselt von der einen Sektion in die andere Sektion fließen kann. Dadurch kann vorteilhaft erreicht werden, dass Öl aus der ersten Sektion zwar grundsätzlich in die zweite Sektion abfließen kann, dies jedoch nur gedrosselt, so dass die Gefahr, dass bei Kurvenfahrten plötzlich kein Öl mehr an der Öffnung des Ansaugkanals zur Verfügung steht, verringert wird. Durch den gedrosselten Abfluss des Öls aus der ersten Sektion in die zweite Sektion dauert es länger, bis das Öl in die zweite Sektion gelangt, im Vergleich zu Ausführungen, in denen keine Trennwand vorhanden ist und das Öl ungedrosselt von der ersten in die zweite Sektion fließen kann. Ebenso wird ein Überfüllen der ersten Sektion vermieden, da überschüssiges Öl durch den Durchgang in die zweite Sektion abfließen kann. Der Durchgang erlaubt ferner, dass Öl aus der zweiten Sektion in die erste Sektion fließen kann, so dass Öl aus der zweiten Sektion auch in der ersten Sektion zur Verfügung steht, sofern dort ein Mangel an Öl herrscht.

In Weiterbildungen kann die Ölwanne oder der Gehäusedeckel einen Rückführeinlass zur Rückführung von Öl aus dem Aggregat in den Aufnahmeraum oder die erste Sektion des Aufnahmeraums, aufweisen, wobei die Öffnung des Ansaugkanals unterhalb oder in einer Projektion des Rückführeinlasses angeordnet ist. Dadurch kann erreicht werden, dass das Öl aus dem Aggregat direkt in die erste Sektion leitbar ist. Alternativ oder zusätzlich kann zwischen dem Rückführeinlass und der Öffnung ein Abweiser angeordnet sein, der so konfiguriert ist, dass aus dem Rückführeinlass in die Ölwanne strömendes Öl gegen den Abweiser strömt oder fließt. Der Abweiser verhindert somit eine direkte Anströmung der Öffnung durch aus dem Rückführeinlass in den Ölaufnahmeraum strömendes Öl. Der Abweiser kann beispielsweise kragenförmig, kuppelförmig oder plattenförmig ausgestaltet sein. Auch andere Formen sind möglich, solange eine direkte Anströmung der Öffnung verhindert wird. Der Vorteil des Verhinderns der direkten Anströmung der Öffnung liegt darin, dass das aus dem Aggregat zurückfließende Öl durch den Umweg über den Abweiser beruhigt wird. Dadurch kann der Effekt verringert werden, dass zurückfließendes Öl übermäßig Luft und Verwirbelungen in das in der ersten Sektion befindliche Öl einbringt. Dadurch kann das Ansaugen des Öls in den Ansaugkanal verbessert oder der Luftanteil in dem angesaugten Öl verringert werden.

In vorteilhaften Ausführungsformen können in dem oder in mindestens einem oder in jedem der Rückführungseinlässe zur Rückführung von Öl aus dem Aggregat in die Ölwanne ein Sieb angeordnet sein, das so konfiguriert ist, dass es von dem vom Aggregat in die Ölwanne zurückgeführten Öl durchströmt wird. Das Sieb bewirkt einerseits, dass von dem Aggregat sich gegebenenfalls lösende Verunreinigungen nicht in die Ölwanne gelangen. Andererseits kann durch das Sieb das zurückfließende Öl von Schaumanteilen oder Verwirbelungen beruhigt werden, insbesondere alternativ oder zusätzlich zu einem optional vorgesehenen Abweiser.

Der eine Ölkanal oder die mehreren Ölkanäle, die der Gehäuserahmen zusammen mit dem Gehäusedeckel und/oder dem Gehäuseboden bildet, können beispielsweise zwischen dem Gehäuserahmen und dem Gehäusedeckel bzw. dem Gehäuserahmen und dem Gehäuseboden angeordnet sein.

Beispielsweise kann wenigstens einer aus Gehäuserahmen und Gehäusedeckel auf seiner zum Gehäusedeckel bzw. Gehäuserahmen weisenden Seite mindestens einen Kanalabschnitt aufweisen, der z. B. rinnenförmig ausgestaltet sein kann. Der mindestens eine Kanalabschnitt kann von dem anderen aus Gehäusedeckel und Gehäuserahmen, insbesondere von mindestens einem korrespondierenden, beispielsweise rinnenförmigen Kanalabschnitt, zur Bildung eines geschlossenen Kanalquerschnitts des einen oder der mehreren Kanäle abgedeckt sein. Der Gehäuserahmen und der Gehäusedeckel können zusammen den mindestens einen Ölkanal bilden.

Beispielsweise kann alternativ oder zusätzlich wenigstens einer aus Gehäuserahmen und Gehäuseboden auf seiner zum Gehäuseboden bzw. Gehäuserahmen weisenden Seite mindestens einen Kanalabschnitt aufweisen, der z. B. rinnenförmig ausgestaltet sein kann. Der mindestens eine Kanalabschnitt kann von dem anderen aus Gehäuseboden und Gehäuserahmen, insbesondere von mindestens einem korrespondierenden, beispielsweise rinnenförmigen Kanalabschnitt, zur Bildung eines geschlossenen Kanalquerschnitts des einen oder der mehreren Kanäle abgedeckt sein. Der Gehäuserahmen und der Gehäuseboden können zusammen den mindestens einen Ölkanal bilden.

Dadurch, dass der Ölkanal von dem Gehäuserahmen und dem Gehäusedeckel und/oder dem Gehäuseboden gebildet werden, wird die Herstellung des Gehäuses vereinfacht. Der rinnenförmige Abschnitt lässt sich bei der Formung, insbesondere Urformung wie z. B. Spritzgießen, des Gehäuserahmens oder des Gehäusedeckels bzw. des Gehäusebodens vorsehen. Durch das Zusammenfügen des Gehäuserahmens mit dem Gehäusedeckel und dem Gehäuseboden können der Ölkanal oder die Ölkanäle fertig gestellt werden. Eine Herstellung der Ölkanäle beispielsweise durch spanende Fertigung oder Nachbearbeitung kann dadurch vermieden oder zumindest der Anteil solcher Nachbearbeitungen verringert werden.

Beispielsweise kann nur einer oder können mehrere Ölkanäle vorgesehen sein, welche den mindestens einen Versorgungsauslass oder mehrere Versorgungsauslässe fluidkommunizierend mit der Ölfilteraufnahme verbinden. Alternativ oder zusätzlich kann ein Ölkanal oder können mehrere Ölkanäle für die Verbindung des Rückführeinlasses oder mehrerer Rückführeinlässe mit dem Pumpeneinlassanschluss vorgesehen sein. In solchen Ausführungsformen kann es zweckmäßig sein, zusätzlich einen oder mehrere Ölkanäle vorzusehen, der/die den Pumpenauslassanschluss mit dem Ölaufnahmeraum, insbesondere der ersten Sektion des Ölaufnahmeraums, fluidkommunizierend verbindet/verbinden. Die genannten Ölkanäle können auf die hierin beschriebene Weise durch Abdecken eines rinnenförmigen Abschnitts gebildet werden.

In Weiterbildungen kann das Gehäuse, beispielsweise der Gehäuserahmen eine Sensoraufnahme aufweisen oder integral bilden, an der ein Peripheriegerät, insbesondere ein Temperatursensor befestigt ist. Insbesondere kann der Temperatursensor in die Sensoraufnahme eingesteckt oder eingerastet werden. Die Sensoraufnahme bzw. das Peripheriegerät können so konfiguriert sein, dass mit dem Peripheriegerät ein Parameter, insbesondere die Temperatur, des Öls in dem Ölkanal oder in einem der Ölkanäle erfassbar ist. Beispielsweise kann sich das Peripheriegerät in den Ölkanal oder einen der Ölkanäle erstrecken. Bevorzugt erstreckt sich der Temperatursensor in den die Ölfilteraufnahme und einen Versorgungsauslass verbindenden Ölkanal, insbesondere zwischen der Ölfilteraufnahme und dem Versorgungsauslass.

In Weiterbildungen betrifft die Erfindung ein Ölfördermodul, welches eine hierin beschriebene Ölwanne oder Ölfiltermodul und mindestens eine Pumpe umfasst. Die mindestens eine Pumpe kann zweiflutig ausgebildet sein, wobei eine Flut dazu dient, Öl aus der Ölwanne zu fördern und dem Maschinenaggregat zuzuführen, und eine zweite Flut dazu dient, aus dem Aggregat zurückgeführtes Öl an eine bestimmte Stelle des Ölaufnahmeraums zu fördern. Ein Pumpeneinlass, insbesondere ein erster Pumpeneinlass kann fluidkommunizierend mit dem Ansaugkanal, insbesondere dem (ersten) Pumpeneinlassanschluss des Gehäuses der Ölwanne verbunden sein, so dass Öl aus der Ölwanne über den Ansaugkanal in die Pumpe förderbar ist. Ein (erster) Pumpenauslass der Pumpe kann mit der Ölwanne oder deren (erstem) Ölkanal fluidkommunizierend verbunden sein, so dass Öl aus der Pumpe in den Ölkanal der Ölwanne förderbar ist. Insbesondere kann Öl über den (ersten) Pumpenauslass der Pumpe über den Ölkanal zu dem mindestens einen Versorgungsauslass zur Versorgung des Aggregats mit Öl gefördert werden. Zwischen dem (ersten) Pumpenauslass und dem Ölkanal des Ölfiltermoduls können beispielsweise die Ölfilteraufnahme und der Ölfilter angeordnet sein. Dementsprechend ist der (erste) Pumpenauslass der Pumpe fluidkommunizierend mit der Ölfilteraufnahme verbunden. Um die vom Aggregat in das zurückgeführte Öl abgegebene Wärme aus dem Fluidkreislauf abführen zu können, kann ein Wärmetauscher vorgesehen sein. Der Wärmetauscher kann zwischen dem (ersten) Pumpenauslass und der Ölwanne oder der Ölfilteraufnahme der Ölwanne angeordnet sein. Der Wärmetauscher ist so konfiguriert, dass er von dem aus dem ersten Pumpenauslass zu dem Ölfiltermodul geförderten Öl durchströmbar ist. Dem Öl, das durch den Wärmetauscher strömt, kann Wärmeenergie entzogen werden.

In Ausführungen mit einem (zweiten) Ölkanal zur Förderung von Fluid aus der Rückführöffnung zu einem (zweiten) Pumpeneinlassanschluss und/oder einem (dritten) Ölkanal zur Förderung von Fluid von dem (zweiten) Pumpenauslassanschluss in den Ölaufnahmeraum, insbesondere die erste Sektion des Ölaufnahmeraums, kann eine Pumpe vorgesehen sein, mit welcher das Öl aus dem einen (zweiten) Ölkanal in den anderen (dritten) Ölkanal förderbar ist, insbesondere von dem Rückführeinlass in den Ölaufnahmeraum.

Allgemein kann ein Pumpeneinlass der Pumpe fluidkommunizierend mit einem Ölkanal der Ölkanäle und ein Pumpenauslass der Pumpe fluidkommunizierend mit einem anderen Ölkanal der Ölkanäle verbunden sein, so dass mittels der Pumpe Öl aus dem einen Ölkanal in den anderen Ölkanal förderbar ist. Die Pumpe kann eine zweite Pumpe sein, die zusätzlich zu der Pumpe für die Förderung des Öls aus dem Ansaugkanal zu dem mindestens einen Versorgungsauslass vorgesehen ist. D. h., dass zwei Pumpen vorgesehen sein können. In vorteilhaften Weiterbildungen kann eine zweiflutige Pumpe vorgesehen sein, welche einen ersten Pumpeneinlass und einen ersten Pumpenauslass für die Förderung von Fluid aus der Ölwanne zu dem mindestens einen Versorgungsauslass und einen zweiten Pumpeneinlass und einen zweiten Pumpenauslass zur Förderung von Fluid von dem mindestens einen Rückführeinlass in den Ölaufnahmeraum bzw. den dritten Ölkanal aufweist. Vorzugsweise kann die mindestens eine Pumpe einen Pumpenantrieb, wie z. B. einen Elektromotor aufweisen.

In Ausführungsformen mit zwei gegenüberliegenden, unterschiedlich hoch ausgebildeten Seitenwandabschnitten des Gehäuserahmens und/oder schräg zueinander verlaufendem Boden und Deckel können mindestens einer, vorzugsweise mehrere oder jeder aus erstem und zweitem Pumpeneinlassanschluss und dem Pumpenauslassanschluss an dem höheren der gegenüberliegenden Seitenwandabschnitte angeordnet sein. Alternativ oder zusätzlich kann die Kanalaufnahme, in die der Ansaugkanal eingesteckt oder einsteckbar ist, von dem höheren der gegenüberliegenden Seitenwandabschnitte gebildet sein.

Die Erfindung wurde anhand mehrerer bevorzugten Ausführungen und Beispiele beschrieben. Im Folgenden wird eine Ausführungsform der Erfindung anhand von Figuren beschrieben. Die dabei offenbarten Merkmale bilden den Gegenstand der Erfindung einzeln und in jeglicher Merkmalskombination vorteilhaft weiter. Es zeigen:
- Figur 1: ein Ölfördermodul mit einer Ölwanne, einer Pumpe und einem Wärmetauscher zur Anbringung an ein Maschinenaggregat,
- Figur 2: das Ölfördermodul aus Figur 1, wobei dessen Komponenten in einer Explosionsdarstellung dargestellt sind,
- Figur 3: eine zusammengebaute Ölwanne in perspektivischer Ansicht,
- Figur 4: die Ölwanne aus Figur 3, wobei Teile davon vereinzelt dargestellt sind,
- Figur 5: eine Draufsicht auf einen Gehäuserahmen der Ölwanne mit einem Ansaugkanal,
- Figur 6: eine perspektivische Ansicht der Teile aus Figur 5, und
- Figur 7: eine perspektivische Ansicht einer Pumpe.

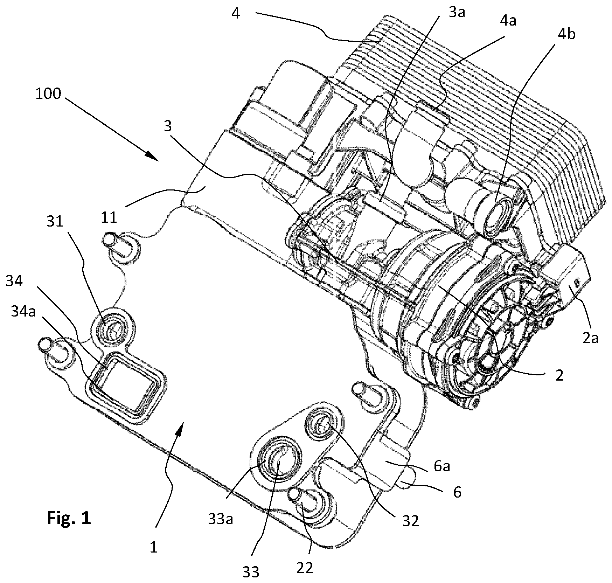

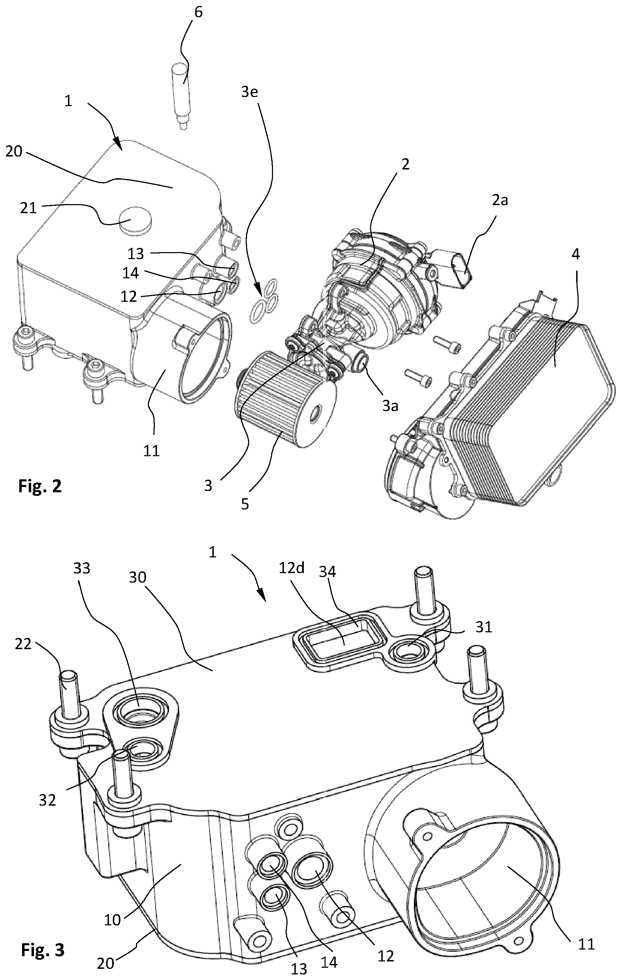

Die Figuren 1 und 2 zeigen ein Ölfördermodul 100, welches eine Ölwanne 1, eine Pumpe 3 mit einem Antrieb 2, eine Ölfilteraufnahme 11 mit einem Ölfilter 5 und einen Wärmetauscher 4 umfasst. Die in dem Ausführungsbeispiel als Ölfiltermodul ausgestaltete Ölwanne 1 bildet die Ölfilteraufnahme 11, in die der Ölfilter 5 eingesetzt ist. In alternativen Ausführungen kann das Ölfördermodul 100 eine separate, d.h. nicht integral mit einem Gehäuse 10, 20, 30 der Ölwanne 1 gebildete Ölfilteraufnahme 11, in die der Ölfilter 5 eingesetzt oder einsetzbar ist, aufweisen, wobei in solchen Ausführungen jedoch bevorzugt ist, dass die Ölfilteraufnahme 11 fluidkommunizierend, insbesondere über eine Leitung oder einen Kanal, mit dem in den Figuren gezeigten Ölkanal 15 verbunden ist, wozu die Ölwanne 1 oder dessen Gehäuse 10, 20, 30 oder Gehäuserahmen 10 einen Anschluss zur Verbindung mit der Ölfilteraufnahme 11 aufweisen kann.

Das Ölfördermodul 100 dient dazu, einem Maschinenaggregat, wie z. B. einer Elektromotor-Getriebeeinheit, insbesondere für ein Kraftfahrzeug, Öl zur Kühlung und/oder Schmierung zuzuführen und das zurücklaufende Öl aufzunehmen und für ein erneutes Zuführen zum Aggregat bereitzustellen. Hierzu wird das Ölfördermodul 100 mit der Oberseite der Ölwanne 1, an der sich Versorgungsauslässe 31, 32 befinden, an dem Aggregat befestigt. Die Versorgungsauslässe 31, 32 werden in dem gezeigten Beispiel von einem Gehäusedeckel 30 gebildet. Über die Versorgungsauslässe 31, 32 wird dem Aggregat Öl zugeführt. Beispielsweise kann über einen der Versorgungsauslässe 31, 32 dem Elektromotor und über den anderen der Versorgungsauslässe 31, 32 dem Getriebe Öl zugeführt werden. An der Oberseite der Ölwanne 1 sind außerdem Rückführeinlässe 33, 34 angeordnet, über die aus dem Aggregat zurückfließendes Öl der Ölwanne 1 zugeführt wird. Die Rückführeinlässe 33, 34 werden in dem gezeigten Beispiel von dem Gehäusedeckel 30 gebildet. Beispielsweise kann über einen der Rückführeinlässe 33, 34 Öl aus dem Elektromotor und über den anderen der Rückführeinlässe 33, 34 Öl aus dem Getriebe in die Ölwanne 1 bzw. das Ölfördermodul zurückgeführt werden. In dem gezeigten Ausführungsbeispiel werden die Ölwanne 1 und somit die daran befestigten Komponenten des Ölfördermoduls 100 mittels mehrerer Schraubenbolzen 22 (Figur 1) an dem Aggregat befestigt. Das Gehäuse 10, 20, 30 der Ölwanne 1 wird zwischen einem Kopf des Schraubenbolzens 22 und dem Aggregat eingeklemmt.

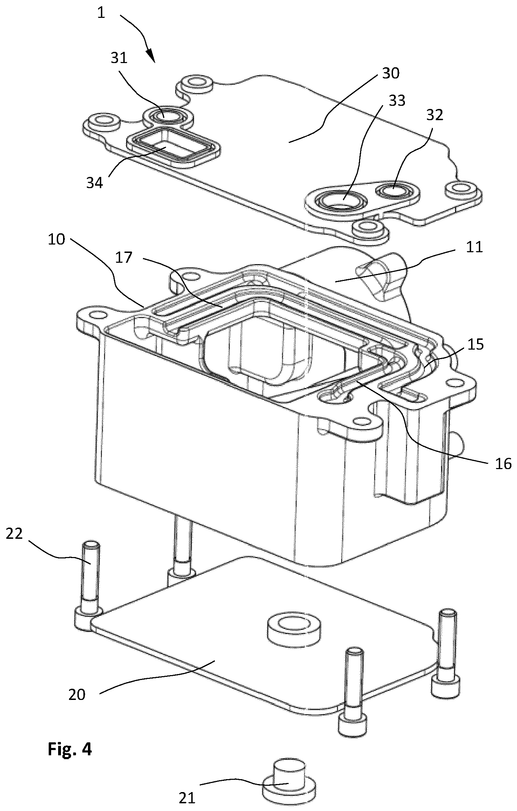

Wie beispielsweise in den Figuren 3 und 4 dargestellt ist, weist die Ölwanne 1 ein Gehäuse 10, 20, 30 auf, welches einen Gehäuserahmen 10, einen Gehäuseboden 20 und einen Gehäusedeckel 30 umfasst. Der Gehäuserahmen 10 ist zwischen dem Gehäusedeckel 30 und dem Gehäuseboden 20 angeordnet. Der Gehäuserahmen 10 bildet eine umlaufende Seitenwand, an deren nach unten weisender Stirnseite der Gehäuseboden 20 und an deren nach oben weisender Stirnseite der Gehäusedeckel 30 angebracht sind. Die umlaufende Seitenwand weist vier Seitenwandabschnitte auf, die zusammen einen Ölaufnahmeraum 18 beispielsweise rechteckig umgeben. Im Ausführungsbeispiel sind der Gehäusedeckel 30 und der Gehäuseboden 20 parallel zueinander angeordnet und die vier Seitenwandabschnitte gleich hoch. In einer Variante der in den Figuren gezeigten Ausführungsform können gegenüberliegende Seitenwandabschnitte unterschiedlich hoch und die beiden Seitenwandabschnitte, welche die gegenüberliegenden Seitenwandabschnitte verbinden, keilförmig ausgebildet sein, wodurch Gehäusedeckel 30 und Gehäuseboden 20 schräg, insbesondere spitzwinklig zueinander angeordnet sind. Durch die Variante lässt sich eine besonders kompakte Bauweise der Ölwanne erreichen, die dennoch hinreichend Platz an dem höheren der gegenüberliegenden Seitenwandabschnitte für beispielsweise eine Ölfilteraufnahme 11, optional eine Sensoraufnahme 6a und die Pumpenanschlüsse 12, 13, 14, die weiter unten erklärt werden, bietet. Die im Ausführungsbeispiel gezeigte Seitenwand hat ebenfalls einen geringen Platzbedarf, ist aber nicht ganz so kompakt wie die Variante, dafür aber konstruktiv etwas einfacher gehalten.

Im Ausführungsbeispiel ist der Gehäuseboden 20 im Vergleich zum Gehäuserahmen 10 und Gehäusedeckel 30 einfach gehalten. Der Gehäuseboden 20 schließt einen Ölaufnahmeraum 18 von unten ab und ist im Wesentlichen plattenförmig ausgebildet. Der komplexere Gehäuserahmen 10 und Gehäusedeckel 30 bilden gemeinsam Ölkanäle 15, 16, 17. Der Gehäusedeckel 30 schließt den Ölaufnahmeraum 18 von oben ab. Der Gehäuserahmen 10 ist nach oben und unten hin offen und mit den dort montierten Gehäuseboden 20 und Gehäusedeckel 30 fluiddicht verschlossen. Der Gehäuserahmen 10 bildet integral eine Ölfilteraufnahme 11, eine Sensoraufnahme 6a und die Pumpenanschlüsse 12, 13, 14 aus.

Beispielsweise können der Gehäuserahmen 10, der Gehäuseboden 20 und der Gehäusedeckel 30 aus Kunststoff gefertigt sein. Insbesondere können der Gehäuseboden 20 mit dem Gehäuserahmen 10 und der Gehäusedeckel 30 mit dem Gehäuserahmen 10 jeweils durch Kleben oder Schweißen verbunden sein. Optional können Gehäuserahmen 10, Gehäuseboden 20 und Gehäusedeckel 30 miteinander verschraubt sein.

Der Gehäuseboden 20 weist eine Ölablasseinrichtung in Form einer Ölablassschraube 21 auf. Die Ölablassschraube 21 ist in ein Innengewinde des Gehäusebodens 20 eingeschraubt und kann zum Ablassen des Öls entfernt werden.

Das Gehäuse 10, 20, 30 bildet mit dem von ihm eingefassten Ölaufnahmeraum 18 eine Ölwanne. In dem Ölaufnahmeraum 18 wird das von dem Aggregat zurückströmende Öl bevorratet, wobei Öl aus dem Ölaufnahmeraum 18 mittels der Pumpe 3 angesaugt und dem Aggregat erneut zugeführt werden kann.

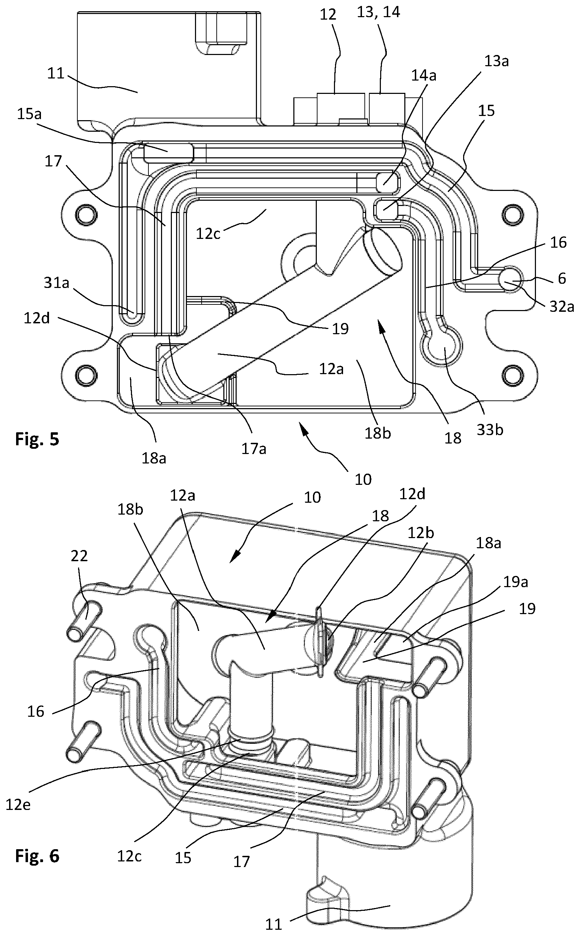

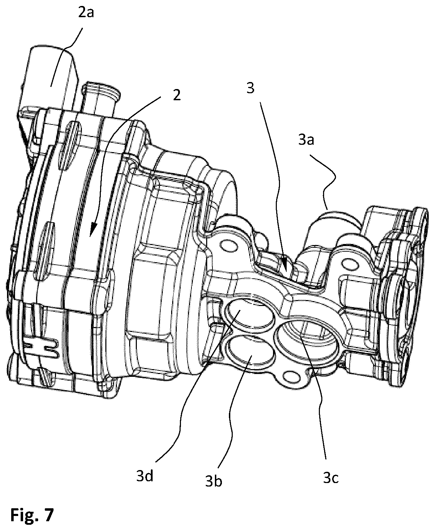

Die Ölwanne 1 weist ferner einen Ansaugkanal 12a auf, der in den Ölaufnahmeraum 18 reicht und der eine Öffnung 12b, über die Öl aus dem Ölaufnahmeraum 18 durch den Ansaugkanal 12a von der Pumpe 3 ansaugbar ist, aufweist. Der Ansaugkanal 12a ist in dem gezeigten Ausführungsbeispiel als Ansaugrohr ausgestaltet, das mit einem Ende in eine Kanalaufnahme 12c des Gehäuserahmens 10 eingesteckt ist. Ein Spalt zwischen einem Innenumfang der Kanalaufnahme 12c und einem Außenumfang des rohrförmigen Ansaugkanals 12a ist mittels einer Dichtung 12e (Figur 6) abgedichtet. Der Gehäuserahmen 10 bildet einen Durchgang, der einen an der Außenseite des Gehäuserahmens 10 gebildeten ersten Pumpeneinlassanschluss 12 und die an der Innenseite des Gehäuserahmens 10 gebildete Kanalaufnahme 12c verbindet, wodurch Öl aus der Ölwanne 18 über den Ansaugkanal 12a und den Durchgang zum ersten Pumpeneinlassanschluss 12 förderbar ist. Dieser Durchgang kreuzt die Ölkanäle 15 und 17 (Figur 5). An den ersten Pumpeneinlassanschluss 12 ist ein erster Pumpeneinlass 3c (Figur 7) der Pumpe 3 anschließbar oder angeschlossen. Dadurch kann die Pumpe 3 Öl aus dem Ölaufnahmeraum 18 ansaugen.

Das Gehäuse 10, 20, 30, insbesondere der Gehäuserahmen 10, weist eine Trennwand 19 auf, die den Ölaufnahmeraum 18 in eine erste Sektion 18a und eine zweite Sektion 18b unterteilt. Die zweite Sektion 18b weist ein kleineres Volumen als die erste Sektion 18a auf. Der Ansaugkanal 12a erstreckt sich von der Kanalaufnahme 12c durch die zweite Sektion 18b und die Trennwand 19 in die erste Sektion 18a. Die Ansaugöffnung 12b ist in der ersten Sektion 18a angeordnet. Dadurch wird Öl aus der ersten Sektion 18a angesaugt.

Die Trennwand 19 weist außerdem einen Durchgang 19a auf, der die erste und zweite Sektion 18a, 18b fluidkommunizierend miteinander verbindet. Der Durchgang 19a bewirkt einen gedrosselten Fluidaustausch zwischen den Sektionen 18a und 18b. Einerseits erlaubt der Durchgang 19a, dass Öl aus der zweiten Sektion 18b in die erste Sektion 18a fließt. Andererseits erlaubt der Durchgang 19b, dass Öl aus der ersten Sektion 18a in die zweite Sektion 18b fließen kann, beispielsweise wenn so viel Öl in die erste Sektion 18a gefördert wird, dass diese überfüllt werden würde.

An dem Gehäuserahmen 10 ist eine Ölfilteraufnahme 11 angeordnet, in die der Ölfilter 5 bzw. ein Ölfiltereinsatz eingesetzt werden kann. Die Ölfilteraufnahme 11 ist über einen ersten Ölkanal 15 mit einem ersten Versorgungsauslass 31 und einem zweiten Versorgungsauslass 32 fluidkommunizierend verbunden. An die ersten und zweiten Versorgungsauslässe 31, 32 ist das Aggregat fluidkommunizierend angeschlossen, so dass Öl von der Ölfilteraufnahme 11 über den ersten Ölkanal 15 zu den Versorgungsauslässen 31, 32 und somit in das Aggregat förderbar ist. Für die begriffliche Unterscheidbarkeit kann der erste Ölkanal 15 optional als Aggregatversorgungskanal bezeichnet werden. Der erste Ölkanal 15 ist zwischen dem Gehäuserahmen 10 und dem damit gefügten Gehäusedeckel 30 gebildet. In der gezeigten Ausführung bilden der Gehäuserahmen 10 und der Gehäusedeckel 30 zusammen den ersten Ölkanal 15. Der Gehäuserahmen 10 weist an seiner zum Gehäusedeckel 30 weisenden Stirnseite einen in Kanallängsrichtung oder in Kanallaufrichtung rinnenförmig ausgebildeten Kanalabschnitt des ersten Ölkanals 15 auf. Der Gehäusedeckel 30 deckt den rinnenförmigen Kanalabschnitt des ersten Ölkanals 15 zur Bildung eines geschlossenen Kanalquerschnitts ab. In dem gezeigten Ausführungsbeispiel weist der Gehäusedeckel 30 ebenfalls einen rinnenförmigen Kanalabschnitt auf, der deckungsgleich mit dem rinnenförmigen Kanalabschnitt des Gehäuserahmens 10 ausgestaltet ist und der diesen abdeckt. Grundsätzlich sind aber auch Ausführungen möglich, in denen der Gehäusedeckel in dem Abschnitt, der den rinnenförmigen Kanalabschnitt des Gehäuserahmens 10 abdeckt, flach ausgebildet ist, d. h. ohne rinnenförmige Ausgestaltung.

Der erste Ölkanal 15 verzweigt sich ausgehend von der Ölfilteraufnahme 11 bzw. einem Filterausgang 15a, an dem das Öl aus dem Ölfilter 5 in den ersten Ölkanal 15 eintritt, mit einem ersten Zweig zum ersten Versorgungsauslass 31 und mit einem zweiten Zweig zu einem zweiten Versorgungsauslass 32. Der erste Versorgungsauslass 31 befindet sich an oder über einer Übergabestelle, deren Position mit dem Bezugszeichen 31a in Figur 5 beispielhaft gezeigt wird. Der zweite Versorgungsauslass 32 befindet sich an oder über einer Übergabestelle, deren Position mit dem Bezugszeichen 32a in Figur 5 beispielhaft gezeigt wird. Das von der Pumpe 3 über den Ansaugkanal 12a angesaugte Fluid wird über einen ersten Pumpenauslass 3a, der fluidkommunizierend mit der Ölfilteraufnahme 11 verbunden ist, in die Ölfilteraufnahme 11 gefördert und dort von dem Ölfilter 5 von Verunreinigungen gefiltert. Das gefilterte Öl wird über den ersten Ölkanal 15 zu den Versorgungsauslässen 31, 32 gefördert und dem Aggregat zugeführt.

Zwischen dem ersten Pumpenauslass 3a und dem Ölfilter 5 bzw. der Ölfilteraufnahme 11 ist ein Wärmetauscher 4 angeordnet, der als Ölkühler dient. Das von der Pumpe 3 über den ersten Pumpenauslass 3a zu der Ölfilteraufnahme 11 geförderte Öl durchströmt den Wärmetauscher 4 und gibt dort Wärmeenergie an ein Kühlmedium ab. Das Kühlmedium wird dem Wärmetauscher 4 über einen Kühlmitteleinlass 4a zugeführt und von dem Wärmetauscher 4 über einen Kühlmittelauslass 4b abgeführt. Die von dem Öl abgegebene Wärmeenergie wird im Wärmetauscher 4 auf das Kühlmittel, welches den Wärmetauscher 4 durchströmt, übertragen und mit dem Kühlmittel aus dem Wärmetauscher abgeführt. Der Massenstrom des Kühlmittels durch den Wärmetauscher 4 kann beispielsweise mittels eines Ventils gesteuert werden, um die Temperatur des Öls im Ölfiltersystem 100 einstellen zu können.

Das Gehäuse 10, 20, 30, insbesondere der Gehäuserahmen 10 weist in dem gezeigten Ausführungsbeispiel eine Sensoraufnahme 6a auf, in die ein Temperatursensor 6 eingesteckt werden kann (Figur 2), der so konfiguriert ist, dass er die Temperatur des Öls, das den ersten Ölkanal 15, insbesondere den zweiten Zweig des ersten Ölkanals 15 durchströmt, messen kann. Ein von dem Temperatursensor 6 ausgegebenes Signal, welches eine Information bzgl. der Öltemperatur enthält, kann an eine Steuerungseinheit oder eine Regelungseinheit ausgegeben werden, welche in Abhängigkeit von der gemessenen Temperatur das Ventil, welches den Massestrom des Kühlmittels durch den Wärmetauscher 4 steuert, ansteuert. Insbesondere kann das Ventil so angesteuert werden, dass der Massestrom durch den Wärmetauscher 4 verringert oder blockiert wird, wenn die vom Temperatursensor 6 gemessene Temperatur kleiner als eine Solltemperatur ist. Beispielsweise kann das Ventil so angesteuert werden, dass es den Massestrom des den Wärmetauscher 4 durchströmenden Kühlmittels in Gang setzt oder erhöht, wenn die vom Temperatursensor 6 gemessene Temperatur über der Solltemperatur des Öls liegt.

Die Ölwanne 1, insbesondere der Gehäusedeckel 30 und/oder der Gehäuserahmen 10, weist einen ersten Rückführeinlass 33 auf, mit dem Öl aus dem Aggregat in die Ölwanne 1 geführt werden kann. Der erste Rückführeinlass 33 ist an der Oberseite der Ölwanne 1 oder an der zum Aggregat weisenden Seite des Ölfiltermoduls 1 angeordnet. Zwischen dem Gehäuserahmen 10 und dem Gehäusedeckel 30 ist ein zweiter Ölkanal 16 angeordnet oder gebildet, der den ersten Rückführeinlass 33 fluidkommunizierend mit einem zweiten Pumpeneinlassanschluss 13, der von dem Gehäuserahmen 10 auf dessen Außenseite gebildet wird, verbindet. Ein von dem Gehäuserahmen 10 gebildeter Durchgang, der den zweiten Pumpeneinlassanschluss 13 mit dem zweiten Ölkanal 16 fluidkommunizierend verbindet, kreuzt in dem gezeigten Beispiel den ersten Ölkanal 15 und einen dritten Ölkanal 17 und mündet an einer Durchgangsöffnung 13a in den zweiten Ölkanal 16 (Figur 5). Ein an der Pumpe 3 gebildeter zweiter Pumpeneinlass 3d (Figur 7) ist an den zweiten Pumpeneinlassanschluss 13 anschließbar oder angeschlossen. Dadurch kann in den ersten Rückführeinlass 33 aus dem Aggregat zurückgeführtes Öl über den zweiten Ölkanal 16 und den zweiten Pumpeneinlassanschluss 13 von der Pumpe 3 angesaugt werden. Für die begriffliche Unterscheidbarkeit kann der zweite Ölkanal 16 optional als Rückführansaugkanal bezeichnet werden. Der erste Rückführeinlass 33 befindet sich an einer Übergabestelle, deren Position mit dem Bezugszeichen 33b in Figur 5 beispielhaft gezeigt wird, in den Ölkanal 16.

Das von der Pumpe 3 über den zweiten Pumpeneinlass 3d angesaugte Öl wird über einen zweiten Pumpenauslass 3b der Pumpe 3 über einen dritten Ölkanal 17, der, beispielsweise mit einer in Figur 5 gezeigten Öffnung 17a, in den Ölaufnahmeraum 18, insbesondere dessen erste Sektion 18a, mündet, in die erste Sektion 18a gefördert. Für die begriffliche Unterscheidbarkeit kann der dritte Ölkanal 17 optional als Rückführversorgungskanal bezeichnet werden. Ein von dem Gehäuserahmen 10 gebildeter Durchgang, der den zweiten Pumpenauslassanschluss 14 mit dem dritten Ölkanal 17 fluidkommunizierend verbindet, kreuzt in dem gezeigten Beispiel den ersten Ölkanal 15 und mündet an einer Durchgangsöffnung 14a in den dritten Ölkanal (Figur 5). Der den zweiten Pumpenauslassanschluss 14 und den dritten Ölkanal 17 verbindende Durchgang ist zwischen dem ersten Ölkanal 15 und dem den zweiten Pumpeneinlassanschluss 13 und den zweiten Ölkanal 16 verbindenden Durchgang angeordnet.

Der Gehäuserahmen 10 weist an seiner Außenseite einen Pumpenauslassanschluss 14 auf, der mit dem zweiten Pumpenauslass 3b der Pumpe 3 verbindbar oder verbunden ist. Der Pumpenauslassanschluss 14 ist über den dritten Ölkanal 17 fluidkommunizierend mit der ersten Sektion 18a verbunden.

Der Gehäuserahmen 10 und der Gehäusedeckel 30 bilden zusammen jeweils den zweiten Ölkanal 16 und den dritten Ölkanal 17. Der Gehäuserahmen 10 weist an seiner zum Gehäusedeckel 30 weisenden Stirnseite einen entlang der Kanallaufrichtung zum Gehäusedeckel 30 hin offenen rinnenförmigen Kanalabschnitt auf, der durch den Gehäusedeckel 30, insbesondere einen flachen oder rinnenförmigen Kanalabschnitt, zur Bildung eines geschlossenen Kanalquerschnitts abgedeckt wird. Gleiches gilt sinngemäß für den dritten Ölkanal 17. D. h., dass der Gehäuserahmen 10 an seiner zum Gehäusedeckel 30 weisenden Stirnseite einen zum Gehäusedeckel 30 in Kanallaufrichtung offenen, rinnenförmigen Kanalabschnitt aufweist, der von dem Gehäusedeckel 30 zur Bildung eines geschlossenen Kanalquerschnitts abgedeckt wird.

In dem gezeigten Ausführungsbeispiel sind die Ölkanäle 15, 16, 17 jeweils durch einen rinnenförmigen Kanalabschnitt, der an dem Gehäuserahmen 10 geformt ist, und den Gehäusedeckel 30, der die rinnenförmigen Kanalabschnitte abdeckt, gebildet. Eine solche Ausführung erlaubt die platzsparende Bauweise und einfache Herstellung der Ölkanäle 15, 16, 17.

Bei der in der Figur 7 gezeigten Pumpe 3 handelt es sich um eine zweiflutige Pumpe mit zwei getrennten Fluidkreisläufen. Die Pumpe 3 kann den ersten Fluidkreislauf über den Pumpeneinlass 3c zu dem Pumpenauslass 3a fördern. Zusätzlich kann die Pumpe 3 den zweiten Fluidkreislauf, der von dem ersten Fluidkreislauf getrennt ist und beispielsweise für den Lenzbetrieb ausgelegt ist, von dem zweiten Pumpeneinlass 3d zu dem zweiten Pumpenauslass 3b fördern. Die Pumpe 3 kann insbesondere zwei Förderelemente, eines für den ersten Fluidkreislauf und eines für den zweiten Fluidkreislauf, aufweisen. Alternativ können statt einer zweiflutigen Pumpe zwei voneinander getrennte Pumpen vorgesehen sein. Die in Figur 7 gezeigte Pumpe 3 wird von einem an ihr angeordneten Antrieb 2 angetrieben. Bei dem Antrieb 2 handelt es sich um einen Elektromotor. Der Antrieb 2 kann eine Steckeraufnahme 2a aufweisen, an die eine Stromversorgung zum Antrieb der Pumpe 3 anschließbar ist.

Die Ölwanne 1, insbesondere der Gehäuserahmen 10 und/oder der Gehäusedeckel 30, weist an seiner Oberseite oder der zum Aggregat weisenden Seite einen zweiten Rückführeinlass 34 auf, der direkt in die erste Sektion 18a der Ölwanne 18 mündet. Dadurch kann Öl aus dem Aggregat direkt und/oder schwerkraftbedingt in die erste Sektion 18a zurückfließen, ohne dass es von der Pumpe 3 in die erste Sektion 18a gefördert werden bzw. den Weg über die Pumpe 3 nehmen muss. Zwischen dem zweiten Rückführeinlass 34 und der Ansaugöffnung 12b des Ansaugkanals 12a ist ein, beispielsweise plattenförmiger, Abweiser 12d angeordnet, der so konfiguriert ist, dass er das über den zweiten Rückführeinlass 34 in die erste Sektion 18a zurückfließende Fluid daran hindert, direkt die Ansaugöffnung 12b anzuströmen. Dadurch wird bewirkt, dass das zurückfließende Öl sich einerseits beruhigen kann und andererseits die Einbringung von Luft in das sich bereits in der ersten Sektion 18a befindliche Öl verringert. Der, insbesondere von oder an dem Ansaugkanal 12a gebildete, Abweiser 12d kann beispielsweise plattenförmig und/oder oberhalb der Ansaugöffnung 12b oder - wie in der in den Figuren dargestellten Ausführungsform - kragenförmig um das ansaugseitige Ende des Ansaugrohrs 12a umlaufend ausgebildet sein. Der Abweiser 12d kann sich parallel oder in etwa parallel zum Gehäuseboden 20 erstrecken.

In dem ersten Rückführeinlass 33 ist ein Sieb 33a so angeordnet, dass es von dem aus dem Aggregat in den ersten Rückführeinlass 33 zurückfließenden Öl durchströmt wird. Insbesondere kann das Sieb 33a den vollen Strömungsquerschnitt des ersten Rückführeinlasses 33 überspannen.

In dem zweiten Rückführeinlass 34 ist ein Sieb 34a so angeordnet, dass es von dem aus dem Aggregat in den zweiten Rückführeinlass 34 strömenden Öl durchströmt wird. Insbesondere kann das Sieb 34a den gesamten Strömungsquerschnitt des zweiten Rückführeinlasses 34 überspannen.

Der Pumpeneinlassanschluss 13 kann in den zweiten Pumpeneinlass 3d eingesteckt sein. Der zwischen dem Außenumfang des Pumpeneinlassanschlusses 13 und dem Innenumfang des Pumpeneinlasses 3d gebildete Spalt kann mittels einer Dichtung 3e abgedichtet sein. Der Pumpenauslassanschluss 14 kann in den Pumpenauslass 3b eingesteckt sein. Der zwischen einem Außenumfang des Pumpenauslassanschlusses 14 und einem Innenumfang des Pumpenauslasses 3b gebildete Spalt kann mittels einer Dichtung 3e abgedichtet sein.

Der Pumpeneinlassanschluss 12 kann in den Pumpeneinlass 3c eingesteckt sein. Der zwischen einem Außenumfang des Pumpeneinlassanschlusses 12 und einem Innenumfang des Pumpeneinlasses 3c gebildeter Spalt kann mittels einer Dichtung 3e abgedichtet sein. Die Dichtungen 3e können beispielsweise ein Dichtring oder O-Ring ausgebildet sein.

Der Strömungsquerschnitt des zweiten Rückführeinlasses 34 ist größer als der Strömungsquerschnitt des ersten Rückführeinlasses 33.

### Bezugszeichenliste

| | | | |
|---|---|---|---|
| 1 | Ölwanne | 15a | Filterausgang |
| 2 | Antrieb | 16 | (zweiter) Ölkanal / Rückführansaugkanal |
| 2a | Steckeraufnahme | | |
| 3 | Pumpe | 17 | (dritter) Ölkanal / Rückführversorgungskanal |
| 3a | (erster) Pumpenauslass | | |
| 3b | (zweiter) Pumpenauslass | 17a | Öffnung |
| 3c | (erster) Pumpeneinlass | 18 | Ölaufnahmeraum |
| 3d | (zweiter) Pumpeneinlass | 18a | erste Sektion |
| 3e | Dichtungen | 18b | zweite Sektion |
| 4 | Wärmetauscher | 19 | Trennwand |
| 4a | Kühlmitteleinlass | 19a | Durchgang |
| 4b | Kühlmittelauslass | | |
| 5 | Ölfilter | 20 | Gehäuseboden |
| 6 | Temperatursensor | 21 | Ölablasseinrichtung / Ölablassschraube |
| 6a | Sensoraufnahme | | |
| | | 22 | Schraubenbolzen |
| 10 | Gehäuserahmen | | |
| 11 | Ölfilteraufnahme | 30 | Gehäusedeckel |
| 12 | (erster) Pumpeneinlassanschluss | 31 | erster Versorgungsauslass |
| 12a | Ansaugkanal / Ansaugstutzen / Ansaugrohr | 31a | Übergabestelle |
| | | 32 | zweiter Versorgungsauslass |
| 12b | Öffnung / Ansaugöffnung | 32a | Übergabestelle |
| 12c | Kanalaufnahme | 33 | (erster) Rückführeinlass |
| 12d | Abweiser | 33a | Sieb |
| 12e | Dichtung | 33b | Übergabestelle |
| 13 | (zweiter) Pumpeneinlassanschluss | 34 | (zweiter) Rückführeinlass |
| 13a | Durchgangsöffnung | 34a | Sieb |
| 14 | Pumpenauslassanschluss | | |
| 14a | Durchgangsöffnung | 100 | Ölfördermodul |
| 15 | (erster) Ölkanal / Aggregatversorgungskanal | | |

## Patentansprüche

1. Ölwanne (1) zur Versorgung eines Aggregats eines Kraftfahrzeugs, welche Folgendes umfasst:
- ein Gehäuse mit einem Gehäuserahmen (10), einem Gehäuseboden (20) und einem Gehäusedeckel (30), wobei der Gehäuserahmen (10) zwischen dem Gehäusedeckel (30) und dem Gehäuseboden (20) angeordnet ist, und
- einen von dem Gehäuse eingefassten Ölaufnahmeraum (18) und einen Ansaugkanal (12a), der in den Ölaufnahmeraum (18) reicht und der eine Öffnung (12b), über die Öl aus dem Ölaufnahmeraum (18) durch den Ansaugkanal (12a) förderbar oder ansaugbar ist, aufweist, **dadurch gekennzeichnet, dass**
∘der Gehäusedeckel (30) mittels einer Fügeverbindung, insbesondere einer stoffschlüssigen Fügeverbindung, mit dem Gehäuserahmen (10) und der Gehäuseboden (20) mittels einer Fügeverbindung, insbesondere einer stoffschlüssigen Fügeverbindung, mit dem Gehäuserahmen (10) gefügt ist und
∘der Gehäuserahmen (10) zusammen mit dem Gehäuseboden (20) und/oder dem Gehäusedeckel (30) einen oder mehrere Ölkanäle (15, 16, 17) bildet.

2. Ölwanne (1) nach Anspruch 1, **dadurch gekennzeichnet, dass** die Ölwanne (1), insbesondere das Gehäuse oder der Gehäuserahmen (10), eine Ölfilteraufnahme (11) zur Aufnahme eines Ölfilters (5) aufweist oder integral bildet, wobei bevorzugt ist, dass der Ölkanal (15) oder einer der Ölkanäle (15, 16, 17) fluidkommunizierend mit der Ölfilteraufnahme (11) verbunden ist, insbesondere in die Ölfilteraufnahme (11) mündet.

3. Ölwanne (1) nach dem vorhergehenden Anspruch, **dadurch gekennzeichnet, dass** die Ölwanne (1) mindestens einen zur Ölversorgung eines Aggregats ausgebildeten Versorgungsauslass (31, 32) aufweist und der Ölkanal (15) oder einer der Ölkanäle (15, 16, 17) die Ölfilteraufnahme (11) und den mindestens einen Versorgungsauslass (31, 32) fluidkommunizierend verbindet, so dass durch den Ölkanal (15) Öl von der Ölfilteraufnahme (11) zu dem mindestens einen Versorgungsauslass (31, 32) förderbar ist.

4. Ölwanne (1) nach einem der vorhergehenden Ansprüche, **dadurch gekennzeichnet, dass** die Ölwanne (1) oder der Gehäusedeckel (30) einen Rückführeinlass (33) oder mehrere Rückführeinlässe (33, 34) zur Rückführung von Öl aus dem Aggregat in die Ölwanne (1) und einen Pumpeneinlassanschluss (13) zur Förderung von Fluid aus der Ölwanne (1) in eine Pumpe (3) aufweist, wobei der Ölkanal (16) oder einer der Ölkanäle (15, 16, 17) den Rückführeinlass (33) oder einen der Rückführeinlässe (33, 34) mit dem Pumpeneinlassanschluss (13) verbindet, so dass durch den Ölkanal (16) Öl von dem Rückführeinlass (33) zu dem Pumpeneinlassanschluss (13) förderbar ist.

5. Ölwanne (1) nach einem der vorhergehenden Ansprüche, **dadurch gekennzeichnet, dass** die Ölwanne (1) mindestens einen Pumpenauslassanschluss (14) zur Förderung von Fluid aus der Pumpe (3) in die Ölwanne (1) aufweist, wobei der Ölkanal (17) oder einer der Ölkanäle (15, 16, 17) den Pumpenauslassanschluss (14) mit dem Ölaufnahmeraum (18) verbindet, so dass durch den Ölkanal (17) Öl von dem Pumpenauslassanschluss (14) in den Ölaufnahmeraum (18) förderbar ist.

6. Ölwanne (1) nach einem der vorhergehenden Ansprüche, **dadurch gekennzeichnet, dass** die Ölwanne (1) oder der Gehäusedeckel (30) einen Rückführeinlass (34) oder mehrere Rückführeinlässe (33, 34) zur Rückführung von Öl aus dem Aggregat in die Ölwanne (1) aufweist, wobei der Rückführeinlass (34) oder einer der Rückführeinlässe (33, 34) in den Ölaufnahmeraum (18) mündet, so dass Öl von dem Rückführeinlass (34) direkt in den Ölaufnahmeraum (18), insbesondere in eine erste oder zweite Sektion (18a, 18b) des Ölaufnahmeraums (18), förderbar ist.

7. Ölwanne (1) nach einem der vorhergehenden Ansprüche, **dadurch gekennzeichnet, dass** die Ölwanne (1) oder der Gehäusedeckel (30) einen Rückführeinlass (34) zur Rückführung von Öl aus dem Aggregat in die Ölwanne (1) aufweist, wobei die Öffnung (12b) des Ansaugkanals (12a) unterhalb oder in einer Projektion des Rückführeinlasses (34) angeordnet ist und/oder zwischen dem Rückführeinlass (34) und der Öffnung (12b) ein, beispielsweise plattenförmiger, Abweiser (12d) angeordnet ist, der so konfiguriert ist, dass aus dem Rückführeinlass (34) in die Ölwanne (1) strömendes Öl gegen den Abweiser (12d) strömt und er eine direkte Anströmung der Öffnung (12b) durch aus dem Rückführeinlass (34) in die Ölwanne (1) strömendes Öl verhindert.

8. Ölwanne (1) nach einem der vorhergehenden Ansprüche, **dadurch gekennzeichnet, dass** wenigstens einer aus Gehäuserahmen (10) und Gehäusedeckel (30) auf seiner zum Gehäusedeckel (30) bzw. Gehäuserahmen (10) weisenden Seite mindestens einen, beispielsweise rinnenförmigen, Kanalabschnitt aufweist, der von dem anderen aus Gehäusedeckel (30) und Gehäuserahmen (10), insbesondere von mindestens einem korrespondierenden, beispielsweise rinnenförmigen, Kanalabschnitt, zur Bildung eines geschlossenen Kanalquerschnitts des einen oder der mehreren Ölkanäle (15, 16, 17) abgedeckt ist.

9. Ölwanne (1) nach einem der vorhergehenden Ansprüche, **dadurch gekennzeichnet, dass** der Ansaugkanal (12a) als Ansaugrohr ausgebildet ist, das in eine von dem Gehäuse, insbesondere dem Gehäuserahmen (10), integral gebildete Kanalaufnahme (12c) eingesteckt ist, wobei zwischen dem Ansaugrohr und der Kanalaufnahme (12c) vorzugsweise eine Dichtung (12e) zur Abdichtung eines zwischen dem Ansaugrohr und der Kanalaufnahme (12c) gebildeten Spalts angeordnet ist.

10. Ölwanne (1) nach dem vorhergehenden Anspruch, **dadurch gekennzeichnet, dass** der Gehäuserahmen (10) einen Durchgang bildet, der die Kanalaufnahme (12c) und einen Pumpeneinlassanschluss (12) fluidkommunizierend verbindet, so dass Öl aus dem Ansaugkanal (12a) über den Pumpeneinlassanschluss (12) zu der Pumpe (3) förderbar ist.

11. Ölwanne (1) nach einem der vorhergehenden Ansprüche, **dadurch gekennzeichnet, dass** das Gehäuse, insbesondere der Gehäuserahmen (10), eine Sensoraufnahme (6a) aufweist oder integral bildet, an der ein Peripheriegerät, insbesondere ein Temperatursensor (6) befestigbar ist, das so konfiguriert ist, dass es einen Messwert, insbesondere eine Temperatur, in dem Ölkanal (15) oder einem der Ölkanäle (15, 16, 17) ermitteln kann.

12. Ölfördermodul (100), welches eine Ölwanne (1) nach einem der vorhergehenden Ansprüche und eine Pumpe (3) umfasst, wobei ein erster Pumpeneinlass (3c) der Pumpe (3) fluidkommunizierend mit dem Ansaugkanal (12a) verbunden ist, so dass Öl aus dem Ölaufnahmeraum (18) über den Ansaugkanal (12a) in die Pumpe (3) förderbar ist, und ein erster Pumpenauslass (3a) der Pumpe (3) mit der Ölwanne (1) oder dem Ölkanal (15) fluidkommunizierend verbunden ist, so dass Öl aus der Pumpe (3) in die Ölwanne (1) oder in den Ölkanal (15) förderbar ist, wobei bevorzugt ist, dass die Ölwanne (1) eine Ölfilteraufnahme (11) aufweist, wobei der erste Pumpenauslass (3a) fluidkommunizierend mit der Ölfilteraufnahme (11) verbunden ist.

13. Ölfördermodul (100) nach dem vorhergehenden Anspruch, **dadurch gekennzeichnet, dass** zwischen dem ersten Pumpenauslass (3a) und der Ölwanne (1) oder einer Ölfilteraufnahme (11) der Ölwanne (1) ein Wärmetauscher (4) angeordnet ist, der so konfiguriert ist, dass der Wärmetauscher (4) von aus dem ersten Pumpenauslass (3a) zu der Ölwanne (1) gefördertem Öl durchströmbar ist.

14. Ölfördermodul (100), welches eine Ölwanne (1) nach einem der Ansprüche 1 bis 11 aufweist, **dadurch gekennzeichnet, dass** ein, beispielsweise zweiter, Pumpeneinlass (3d) einer Pumpe (3) fluidkommunizierend mit einem Ölkanal (16) der Ölkanäle (15, 16, 17) und ein, beispielsweise zweiter, Pumpenauslass (3b) der Pumpe (3) fluidkommunizierend mit einem anderen Ölkanal (17) der Ölkanäle (15, 16, 17) verbunden ist, so dass mittels der Pumpe (3) Öl aus dem einen Ölkanal (16) in den anderen Ölkanal (17) förderbar ist.

## Claims

1. An oil sump (1) for supplying an assembly of a motor vehicle, comprising:
- a housing comprising a housing frame (10), a housing base (20) and a housing cover (30), wherein the housing frame (10) is arranged between the housing cover (30) and the housing base (20); and
- an oil accommodating space (18) enclosed by the housing, and a suction channel (12a) which extends into the oil accommodating space (18) and comprises an opening (12b) via which oil can be delivered or suctioned from the oil accommodating space (18) through the suction channel (12a), **characterised in that**
∘ the housing cover (30) is joined to the housing frame (10) by means of a joining connection, in particular a material-fit joining connection, and the housing base (20) is joined to the housing frame (10) by means of a joining connection, in particular a material-fit joining connection, and
∘ the housing frame (10) together with the housing base (20) and/or the housing cover (30) forms one or more oil channels (15, 16, 17).

2. The oil sump (1) according to claim 1, **characterised in that** the oil sump (1), in particular the housing or the housing frame (10), comprises or integrally forms an oil filter receptacle (11) for accommodating an oil filter (5), wherein preferably the oil channel (15) or one of the oil channels (15, 16, 17) is connected in fluid communication with the oil filter receptacle (11) and in particular emerges into the oil filter receptacle (11).

3. The oil sump (1) according to the preceding claim, **characterised in that** the oil sump (1) comprises at least one supply outlet (31, 32) which is embodied to supply oil to an assembly, and the oil channel (15) or one of the oil channels (15, 16, 17) connects the oil filter receptacle (11) and the at least one supply outlet (31, 32) in fluid communication, such that oil can be delivered from the oil filter receptacle (11) to the at least one supply outlet (31, 32) through the oil channel (15).

4. The oil sump (1) according to any one of the preceding claims, **characterised in that** the oil sump (1) or the housing cover (30) comprises a feedback inlet (33) or multiple feedback inlets (33, 34) for feeding oil from the assembly back into the oil sump (1) and a pump inlet port (13) for delivering fluid from the oil sump (1) into a pump (3), wherein the oil channel (16) or one of the oil channels (15, 16, 17) connects the feedback inlet (33) or one of the feedback inlets (33, 34) to the pump inlet port (13), such that oil can be delivered from the feedback inlet (33) to the pump inlet port (13) through the oil channel (16).

5. The oil sump (1) according to any one of the preceding claims, **characterised in that** the oil sump (1) comprises at least one pump outlet port (14) for delivering fluid from the pump (3) into the oil sump (1), wherein the oil channel (17) or one of the oil channels (15, 16, 17) connects the pump outlet port (14) to the oil accommodating space (18), such that oil can be delivered from the pump outlet port (14) into the oil accommodating space (18) through the oil channel (17).

6. The oil sump (1) according to any one of the preceding claims, **characterised in that** the oil sump (1) or the housing cover (30) comprises a feedback inlet (34) or multiple feedback inlets (33, 34) for feeding oil from the assembly back into the oil sump (1), wherein the feedback inlet (34) or one of the feedback inlets (33, 34) emerges into the oil accommodating space (18), such that oil can be delivered from the feedback inlet (34) directly into the oil accommodating space (18), in particular into a first section (18a) or second section (18b) of the oil accommodating space (18).

7. The oil sump (1) according to any one of the preceding claims, **characterised in that** the oil sump (1) or the housing cover (30) comprises a feedback inlet (34) for feeding oil from the assembly back into the oil sump (1), wherein the opening (12b) of the suction channel (12a) is arranged below or in a projection of the feedback inlet (34), and/or a deflector (12d) which is for example plate-shaped and is arranged between the feedback inlet (34) and the opening (12b) is configured such that oil which flows from the feedback inlet (34) into the oil sump (1) flows against the deflector (12d) which prevents oil which flows from the feedback inlet (34) into the oil sump (1) from flowing directly onto the opening (12b).

8. The oil sump (1) according to any one of the preceding claims, **characterised in that** at least one of the housing frame (10) and the housing cover (30) comprises at least one channel portion, which is for example a groove-shaped channel portion, on its side pointing towards the housing cover (30) or housing frame (10), respectively, wherein said at least one channel portion is covered by the other of the housing cover (30) and the housing frame (10), in particular by at least one corresponding and for example groove-shaped channel portion, in order to form a closed cross-section of the one or more oil channels (15, 16, 17).

9. The oil sump (1) according to any one of the preceding claims, **characterised in that** the suction channel (12a) is embodied as a suction pipe which is inserted into a channel receptacle (12c) integrally formed by the housing, in particular the housing frame (10), wherein a gasket (12e) is preferably arranged between the suction pipe and the channel receptacle (12c) for sealing off a gap formed between the suction pipe and the channel receptacle (12c).

10. The oil sump (1) according to the preceding claim, **characterised in that** the housing frame (10) forms a passage which connects the channel receptacle (12c) and a pump inlet port (12) in fluid communication, such that oil can be delivered from the suction channel (12a) to the pump (3) via the pump inlet port (12).

11. The oil sump (1) according to any one of the preceding claims, **characterised in that** the housing, in particular the housing frame (10), comprises or integrally forms a sensor receptacle (6a) to which a peripheral, in particular a temperature sensor (6), can be fastened, wherein said peripheral is configured such that it can ascertain a measurement value, in particular a temperature, in the oil channel (15) or in one of the oil channels (15, 16, 17).

12. An oil delivery module (100) which comprises an oil sump (1) according to any one of the preceding claims and a pump (3), wherein a first pump inlet (3c) of the pump (3) is connected in fluid communication with the suction channel (12a), such that oil can be delivered from the oil accommodating space (18) into the pump (3) via the suction channel (12a), and a first pump outlet (3a) of the pump (3) is connected in fluid communication with the oil sump (1) or the oil channel (15), such that oil can be delivered from the pump (3) into the oil sump (1) or into the oil channel (15), wherein the oil sump (1) preferably comprises an oil filter receptacle (11), wherein the first pump outlet (3a) is connected in fluid communication with the oil filter receptacle (11).

13. The oil delivery module (100) according to the preceding claim, **characterised in that** a heat exchanger (4) which is arranged between the first pump outlet (3a) and the oil sump (1) or an oil filter receptacle (11) of the oil sump (1) is configured such that oil delivered from the first pump outlet (3a) to the oil sump (1) can flow through the heat exchanger (4).

14. An oil delivery module (100) which comprises an oil sump (1) according to any one of claims 1 to 11, **characterised in that** a pump inlet which is for example a second pump inlet (3d) of a pump (3) is connected in fluid communication with one (16) of the oil channels (15, 16, 17), and a pump outlet which is for example a second pump outlet (3b) of the pump (3) is connected in fluid communication with another (17) of the oil channels (15, 16, 17), such that oil can be delivered from the one oil channel (16) into the other oil channel (17) by means of the pump (3).

## Revendications

1. Carter d'huile (1) pour alimenter un ensemble d'un véhicule automobile, le carter d'huile (1) comprenant :
- un boîtier comportant un cadre de boîtier (10), une base de boîtier (20) et un couvercle de boîtier (30), le cadre de boîtier (10) étant disposé entre le couvercle de boîtier (30) et la base de boîtier (20) ; et
- un espace de réception d'huile (18) entouré par le boîtier, et un canal d'aspiration (12a) s'étendant vers et dans l'espace de réception d'huile (18) et présentant une ouverture (12b) par laquelle de l'huile peut être refoulée ou aspirée à partir de l'espace de réception d'huile (18) à travers le canal d'aspiration (12a), **caractérisé en ce que**
∘ le couvercle de boîtier (30) et le cadre de boîtier (10) sont joints au moyen d'un assemblage, en particulier d'un assemblage par liaison de matière, et la base de boîtier (20) et le cadre de boîtier (10) sont joints au moyen d'un assemblage, en particulier d'un assemblage par liaison de matière, et
∘ le cadre de boîtier (10) ainsi que la base de boîtier (20) et / ou le couvercle de boîtier (30) forment un ou plusieurs canaux d'huile (15, 16, 17).

2. Carter d'huile (1) selon la revendication 1, **caractérisé en ce que** le carter d'huile (1), en particulier le boîtier ou le cadre de boîtier (10), présente ou forme intégralement un réceptacle de filtre à huile (11) pour recevoir un filtre à huile (5), le canal d'huile (15) ou l'un des canaux d'huile (15, 16, 17) étant de préférence relié au réceptacle de filtre à huile (11) en communication fluidique, en particulier débouchant dans le réceptacle de filtre à huile (11).

3. Carter d'huile (1) selon la revendication précédente, **caractérisé en ce que** le carter d'huile (1) présente au moins une sortie d'alimentation (31, 32) réalisée pour alimenter en huile un ensemble et que le canal d'huile (15) ou l'un des canaux d'huile (15, 16, 17) relie le réceptacle de filtre à huile (11) et ladite au moins une sortie d'alimentation (31, 32) en communication fluidique, de sorte que de l'huile peut être refoulée depuis le réceptacle de filtre à huile (11) vers ladite au moins une sortie d'alimentation (31, 32) à travers le canal d'huile (15).

4. Carter d'huile (1) selon l'une quelconque des revendications précédentes, **caractérisé en ce que** le carter d'huile (1) ou le couvercle de boîtier (30) présente une entrée de retour (33) ou plusieurs entrées de retour (33, 34) pour renvoyer de l'huile depuis l'ensemble vers et dans le carter d'huile (1), et un raccord d'entrée de pompe (13) pour refouler du fluide depuis le carter d'huile (1) vers et dans une pompe (3), le canal d'huile (16) ou l'un des canaux d'huile (15, 16, 17) reliant l'entrée de retour (33) ou l'une des entrées de retour (33, 34) au raccord d'entrée de pompe (13), de sorte que de l'huile peut être refoulée depuis l'entrée de retour (33) vers le raccord d'entrée de pompe (13) à travers le canal d'huile (16).

5. Carter d'huile (1) selon l'une quelconque des revendications précédentes, **caractérisé en ce que** le carter d'huile (1) présente au moins un raccord de sortie de pompe (14) pour refouler du fluide depuis la pompe (3) vers et dans le carter d'huile (1), le canal d'huile (17) ou l'un des canaux d'huile (15, 16, 17) reliant le raccord de sortie de pompe (14) à l'espace de réception d'huile (18), de sorte que de l'huile peut être refoulée depuis le raccord de sortie de pompe (14) vers et dans l'espace de réception d'huile (18) à travers le canal d'huile (17).

6. Carter d'huile (1) selon l'une quelconque des revendications précédentes, **caractérisé en ce que** le carter d'huile (1) ou le couvercle de boîtier (30) présente une entrée de retour (34) ou plusieurs entrées de retour (33, 34) pour renvoyer de l'huile depuis l'ensemble vers et dans le carter d'huile (1), l'entrée de retour (34) ou l'une des entrées de retour (33, 34) débouchant dans l'espace de réception d'huile (18), de sorte que de l'huile peut être refoulée depuis l'entrée de retour (34) directement vers et dans l'espace de réception d'huile (18), en particulier dans une première ou une seconde section (18a, 18b) de l'espace de réception d'huile (18).

7. Carter d'huile (1) selon l'une quelconque des revendications précédentes, **caractérisé en ce que** le carter d'huile (1) ou le couvercle de boîtier (30) présente une entrée de retour (34) pour renvoyer de l'huile depuis l'ensemble vers et dans le carter d'huile (1), l'ouverture (12b) du canal d'aspiration (12a) étant disposée en dessous ou en projection de l'entrée de retour (34), et / ou un déflecteur (12d), par exemple en forme de plaque, étant disposé entre l'entrée de retour (34) et l'ouverture (12b) et configuré de sorte que de l'huile s'écoulant depuis l'entrée de retour (34) vers et dans le carter d'huile (1) s'écoule contre le déflecteur (12d) qui empêche que de l'huile s'écoulant depuis l'entrée de retour (34) vers et dans le carter d'huile (1) s'écoule directement vers l'ouverture (12b).

8. Carter d'huile (1) selon l'une quelconque des revendications précédentes, **caractérisé en ce qu'**au moins l'un parmi le cadre de boîtier (10) et le couvercle de boîtier (30) présente au moins une partie de canal, par exemple en forme de rainure, sur son côté faisant face à l'autre parmi le cadre de boîtier (10) et le couvercle de boîtier (30), ladite partie de canal étant recouverte par l'autre parmi le cadre de boîtier (10) et le couvercle de boîtier (30), en particulier par au moins une partie de canal correspondante, par exemple en forme de rainure, pour former une section transversale de canal fermée dudit canal d'huile ou desdits canaux d'huile (15, 16, 17).

9. Carter d'huile (1) selon l'une quelconque des revendications précédentes, **caractérisé en ce que** le canal d'aspiration (12a) est réalisé comme un tuyau d'aspiration inséré dans un réceptacle de canal (12c) formé intégralement par le boîtier, en particulier par le cadre de boîtier (10), un joint d'étanchéité (12e) étant de préférence disposé entre le tuyau d'aspiration et le réceptacle de canal (12c) pour étancher une fente formée entre le tuyau d'aspiration et le réceptacle de canal (12c).

10. Carter d'huile (1) selon la revendication précédente, **caractérisé en ce que** le cadre de boîtier (10) forme un passage reliant le réceptacle de canal (12c) et un raccord d'entrée de pompe (12) en communication fluidique, de sorte que de l'huile peut être refoulée depuis le canal d'aspiration (12a) vers la pompe (3) via le raccord d'entrée de pompe (12).

11. Carter d'huile (1) selon l'une quelconque des revendications précédentes, **caractérisé en ce que** le boîtier, en particulier le cadre de boîtier (10), présente ou forme intégralement un réceptacle de capteur (6a) auquel peut être fixé un dispositif périphérique, en particulier un capteur de température (6), configuré pour pouvoir déterminer une valeur mesurée, en particulier une température, dans le canal d'huile (15) ou dans l'un des canaux d'huile (15, 16, 17).

12. Module de refoulement d'huile (100) comprenant un carter d'huile (1) selon l'une quelconque des revendications précédentes et une pompe (3), une première entrée de pompe (3c) de la pompe (3) étant reliée au canal d'aspiration (12a) en communication fluidique, de sorte que de l'huile peut être refoulée depuis l'espace de réception d'huile (18) vers et dans la pompe (3) via le canal d'aspiration (12a), et une première sortie de pompe (3a) de la pompe (3) étant reliée au carter d'huile (1) ou au canal d'huile (15) en communication fluidique, de sorte que de l'huile peut être refoulée depuis la pompe (3) vers et dans le carter d'huile (1) ou vers et dans le canal d'huile (15), le carter d'huile (1) présentant de préférence un réceptacle de filtre à huile (11), la première sortie de pompe (3a) étant reliée au réceptacle de filtre à huile (11) en communication fluidique.

13. Module de refoulement d'huile (100) selon la revendication précédente, **caractérisé en ce qu'**un échangeur de chaleur (4) est disposé entre la première sortie de pompe (3a) et le carter d'huile (1) ou un réceptacle de filtre à huile (11) du carter d'huile (1) et configuré de sorte que de l'huile refoulée depuis la première sortie de pompe (3a) vers le carter d'huile (1) peut s'écouler à travers l'échangeur de chaleur (4).

14. Module de refoulement d'huile (100) comprenant un carter d'huile (1) selon l'une quelconque des revendications 1 à 11, **caractérisé en ce qu'**une entrée de pompe, par exemple une seconde entrée de pompe (3d) d'une pompe (3), est reliée à l'un canal d'huile (16) parmi les canaux d'huile (15, 16, 17) en communication fluidique et qu'une sortie de pompe, par exemple une seconde sortie de pompe (3b) de la pompe (3), est reliée à un autre canal d'huile (17) parmi les canaux d'huile (15, 16, 17) en communication fluidique, de sorte que de l'huile peut être refoulée depuis ledit un canal d'huile (16) vers et dans ledit autre canal d'huile (17) au moyen de la pompe (3).
